# EUROPEAN PATENT SPECIFICATION

(11) **EP 4 051 564 B1**
(45) Date of publication and mention of the grant of the patent: **01.10.2025**
(21) Application number: 20808508.4
(22) Date of filing: 25.10.2020
(51) Int. Cl.: B62M 6/55, B62M 6/45, B62M 9/00

(54) **PROPULSION UNIT FOR ELECTRIC POWER-ASSISTED BICYCLE**
ANTRIEBSEINHEIT FÜR EIN FAHRRAD MIT ELEKTRISCHEM HILFSANTRIEB
UNITÉ DE PROPULSION POUR BICYCLETTE À ASSISTANCE ÉLECTRIQUE

(30) Priority: 28.10.2019 IT 201900019844
(43) Date of publication of application: 07.09.2022
(73) Proprietor: Texa Dynamics S.R.L., 31050 Monastier di Treviso (TV) (IT)
(72) Inventor: VIANELLO, Bruno, 31050 Monastier di Treviso (TV) (IT)
(74) Representative: Citron, Massimiliano
(86) International application number: PCT/IB2020/060012
(87) International publication number: WO 2021/084396

(56) References cited:
- EP-A1- 2 463 189
- CN-B- 101 244 753
- CN-U- 206 797 618
- CN-U- 209 351 553
- ES-U- 1 037 650
- US-A- 5 853 058
- US-A1- 2017 073 039

## Description

This invention refers to a propulsion unit for an electric bicycle and the electric bicycle equipped with the propulsion unit.

An electric power-assisted bicycle has an electric motor to help pedaling. To power the motor it is equipped with a battery, which of course has a charge limit, therefore the assisted mileage is limited.

To respond to this problem, e.g. EP 1457414 offers an electric bicycle in which electric energy is regeneratively recovered during braking and the battery is recharged. Two chains and a special clutch are used to connect the rear wheel to the motor when it works as a dynamo. EP 1457414 has however a complex, bulky and heavy structure.

US 5 853 058 A discloses an electric power unit and power transmitting unit for a cycle vehicle , and in accordance with the preamble of claim 1.

The main object of the invention is to improve the present state of the art, and the object is achieved by what is stated in the attached claims. Advantageous technical features are defined in the dependent claims.

It is proposed a propulsion unit for an electric bicycle comprising:
two pedals (optional and e.g. of known type),
an electric motor to assist pedaling,
a first and a second toothed wheel which are
   rotatable about the same axis and
   connectable to the motor to receive drive torque,
a movable member configured to receive rotary motion from the motor and transfer it to a toothed wheel,
each toothed wheel being equipped with a portion that can be coupled to the movable member, which is selectively shiftable between two operating positions in which - respectively - it engages at a time only the coupled portion of one of the two toothed wheels leaving the other one idle.

As a special connection between the motor and the movable member/selector, a variant envisages a splined shaft that allows the movable member to be oscillating with respect to the motor and to be selectively coupled with one of the two toothed wheels.

The movable member offers the advantage of avoiding unwanted recirculation of mechanical power between the components connected to the two chains. Since the two chain loops can engage a toothed wheel with different transmission ratios, a kinematics sticking, with relative breakage of the chains and toothed wheels, could occur.

Since the two toothed wheels never remain connected simultaneously to the bicycle wheel, each chain can work independently of the other.

Preferably the movable member is configured to translate parallel to the axis, in order to simplify the mechanics and compact the size of the unit. Other kinematics are possible, however, e.g. a member oscillating around a fulcrum.

For the same reason, it is preferable that the movable member is mounted between the two toothed wheels, e.g. on a linear guide.

Preferably, the movable member and each of the two toothed wheels comprise portions that can be fitted one into the other, or coupled one to the other, e.g. a radial or frontal toothing.

Preferably, in order to push the movable member toward one or each of the two operating positions, the unit generally comprises an actuator, e.g. a magnetic or electric actuator or a passive element, such as an elastic and/or magnetic or electric element.

According to the invention, the unit comprises an electronic circuit (e.g. microprocessor-based) to control/adjust the position of the movable member.

According to the invention, the unit is associated with a first chain to carry driving torque to the first toothed wheel from a first pinion or gear rotationally integral with a wheel of the bicycle. The unit is associated with a second chain to connect the second toothed wheel to a second pinion or gear. The second pinion may be a multiple-crown pinion (a so-called pinion pack) of a shift gearbox with relative derailleur for the chain, and is preferably coupled to the bicycle wheel through a freewheel.

Preferably the unit or bicycle comprises a battery to power the electric motor and to receive charging energy when the movable member is switched to the engagement position on the first toothed wheel. In fact the first chain can be used to brake the wheel when the bicycle goes downhill, in which case the first toothed wheel carries torque to the motor which works as a brake (or dynamo). The kinetic energy subtracted from the bicycle is converted by the electric motor into electric energy that can be stored by the battery.

The electronic circuit that controls the movable member is preferably programmable, so it can work according to various operating logics.

The electronic circuit may also regulate the conversion of mechanical energy into electrical energy, or vice versa, in the bicycle. For example, it either acts to brake the bike running downhill while simultaneously it recovers energy from the motor by storing it in the battery, or it acts to brake the bike going downhill by dissipating all the energy generated by the motor.

In particular, the electronic circuit controls the movable member according to various operating logics. For this purpose, the electronic circuit is connected with, for example
a torque sensor to detect the torque exerted muscularly on the pedals and/or
a bike speed sensor, and/or
an angular speed sensor for the motor output shaft, and/or
a position sensor for the control lever of a bicycle brake.

In a preferred variant the electronic circuit is configured to switch the movable member to the position wherein it is coupled with the first toothed wheel when
it detects zero speed of the pedals, and/or
it detects a user action on the brake lever.

In a preferred variant the electronic circuit is configured to switch the movable member to the position wherein it is coupled with the second toothed wheel when
it detects pedal speed other than zero, and/or
it detects a torque exerted by the pedals.

In general, the electronic circuit is configured to switch the movable member to the position wherein it is coupled with the first toothed wheel (electrical energy recovery) when it detects a condition of the bicycle and/or an action of the user directed to braking.

In general, the electronic circuit is configured to switch the movable member to the position in which it is coupled with the second pinion (mechanical power supplied by the motor) when it detects a condition of the bicycle and/or an action of the user directed to the continuation of pedaling.

Another operating logic for the electronic circuit is that it is configured to switch the movable member to the position wherein it is coupled with the first toothed wheel (electrical energy recovery) when it detects that the bike is advancing downhill. An advantage is that this mode results in a braking phase to contain the downhill speed of the bike.

Note that the coaxiality between the first and second toothed wheel gives compactness to the drive unit.

According to a preferred embodiment, the first toothed wheel has a diameter different from the second toothed wheel's, in particular the first toothed wheel has a smaller diameter than the second toothed wheel's. Even more preferable, the first toothed wheel has a smaller diameter than the first gear or pinion.

Thus the motor rpm is increased by the gear ratio between the second toothed wheel and the second gear, improving the performance of the bike. In fact, the motors commonly used in electric bicycles, in particular axial-flow motors, do not have brilliant performance at low rpm.

For example, the transmission ratio between the first toothed wheel and the first gear is 3:1 to 6:1, e.g. 5:1.

According to a preferred embodiment, the first and second chains are arranged on the same side of the bicycle, with the advantage of reducing the volume occupied by the chains and giving less interference to the cyclist's legs.

According to a preferred embodiment, the first and second chains are arranged on opposite sides of the bicycle, i.e. on opposite sides of the wheel, with the advantage of obtaining more space on the wheel hub for e.g. mounting a gear shift pinion pack with or without derailleur.

Another aspect of the invention is a bicycle comprising a propulsion unit as defined here.

Further advantages will be clear from the following description, which refers to an exemplary embodiment of bike in which:
- Figure 1 shows a top view of components of an electric bicycle;
- Figure 2 shows a top view of components of a second electric bicycle;
- Figure 3 shows a schematic view of a propulsion unit for the bicycle.

Equal numbers in the figures indicate equal or substantially equal parts.

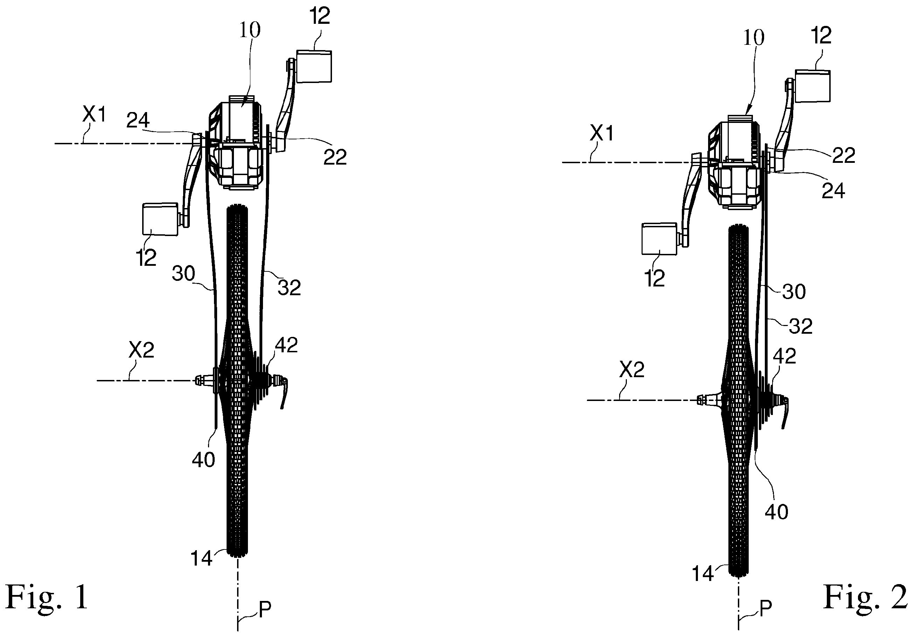

Figure 1 shows a first motorization variant for an electric bicycle (not shown).

The propulsion of the bicycle is ensured by a propulsion unit 10 from which two pedals 12 come out and which houses an electric motor M to assist pedaling.

The pedals 12 and the electric motor M have independent and coaxial shafts arranged along an axis X1.

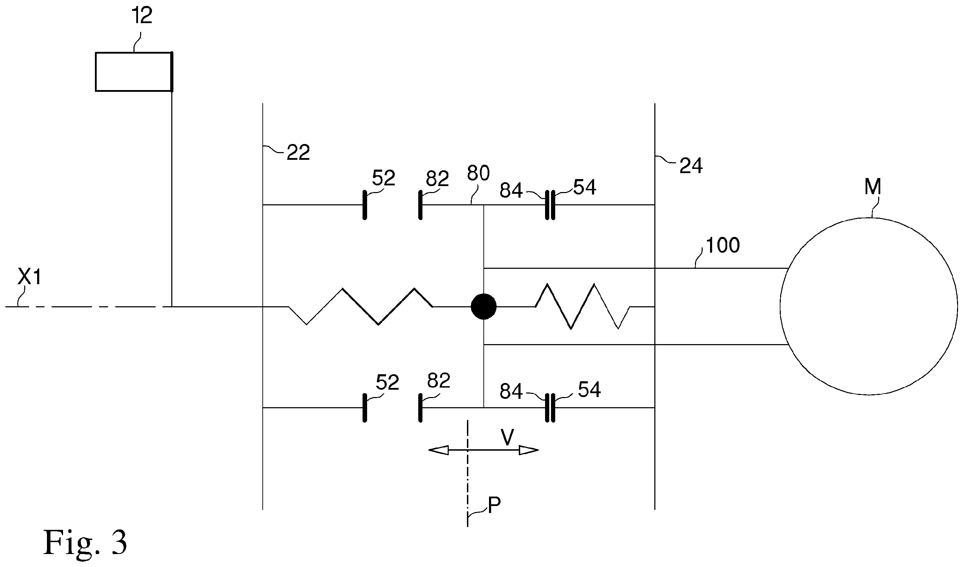

The pedals 12 are connected to a toothed wheel 22, while the shaft 100 of the motor M is connected (fig. 3) to a member 50 movable linearly along the X1 axis. The unit 10 also comprises a second toothed wheel 24.

The toothed wheels 22, 24 each comprise a coupling zone 82, 84 to connect integrally with the movable member 50, which for this purpose is equipped with corresponding coupling zones 52, 54. By moving back and forth along X1 (see direction V in Fig. 3), the member 50 can be selectively connected to only one coupling zone 82, 84 to transfer or receive drive torque to/from the respective toothed wheel. Only one of the toothed wheels 22, 24 at a time is connectable to the motor M via the member 50, the other one remains idle.

The toothed wheel 24 is engaged with a chain 30 to transfer or receive torque to/from a pinion 40 of a bicycle wheel 14, rotatable about an axis X2 parallel to the X1 axis. The pinion 40 is always rotationally integral with the wheel 14.

A second chain 32 connects the toothed wheel 22 to a pinion assembly 42 of the gear shift mounted on the opposite side of the wheel 14 with respect to the pinion 40. The chain 32 transfers muscle strength from the pedals 12 to the assembly 42 and is movable on the pinion assembly 42 by a derailleur (not shown). Optionally, the pinion assembly 42 can be constituted of only one pinion.

As it can be seen from fig. 1, the chains 30, 32 are placed on opposite sides with respect to an imaginary plane on which the wheel 14 lies (a plane P orthogonal to the X1 and X2 axes). This allows the easy assembly of the pinion assembly 42, which optionally can also be made up of a single pinion, or of an assembly with many pinions.

Figure 2 shows a second motorization variant.

This time the chains 30, 32 are placed on the same side with respect to an imaginary P plane on which the wheel 14 lies (a plane orthogonal to the X1 and X2 axes). This makes it possible to limit the overall bulk of the chains 30, 32, e.g. for the biker's ankles.

For the two variants, there is also a battery (not shown) to power the electric motor.

The system of fig. 3 may be integrated in each of the two variants of fig. 1 and 2.

In particular, the member 50 is linearly translatable along a direction orthogonal to the P plane, i.e. parallel to the X1 and/or X2 axis.

An electronic circuit (not shown) controls the operation of the motor M both when it supplies power to assist pedaling, and when it is exploited as an electric power generator while the bike is running downhill. All or part of the generated energy can be stored in the battery, according to the electronic circuit's control over the flow of energy supplied by the motor.

The electronic circuit is configured to regulate the energy recovery and/or to brake the bike going downhill, e.g. by dissipating energy without sending it to the battery. All combinations of operation are possible.

In particular, the electronic circuit is configured to control the position of the member 50, in order to determine whether the motor supplies power or receives it to convert it into electrical energy.

For this purpose the electronic circuit drives a mechanical actuator (not shown) to move the member 50. Preferably the positional control of the member 50 is automatic, i.e. it is not a user's burden. For example, the electronic circuit may detect by a sensor the movement of the pedals 12, and if it recognizes that they are stationary it moves the member 50 to connect the motor M to the toothed wheel 24. If, on the other hand, the electronic circuit detects pedal motion with the sensor 12, it makes the member 50 move to connect the motor M to the toothed wheel 22 to assist pedaling.

## Claims

1. Propulsion unit for electric bicycle comprising:
an electric motor (M) to assist pedaling,
a first (24) and a second (22) toothed wheel which are
rotatable about the same axis (X) and
connectable to the motor for receiving driving torque,
a movable member (80) configured to receive rotary motion from the motor and transfer it to one of said toothed wheels,
each of said toothed wheels being provided with a portion (82, 84) couplable to the movable member, which is selectively shiftable between two operating positions in which - respectively - it engages at a time only the connectable portion of one of the two toothed wheels leaving idle the other;
**characterized by** the propulsion unit comprising:
• a first chain (30) to carry driving torque to the first toothed wheel from a first pinion or gear rotationally integrable with a wheel of the bicycle,
• a second chain (32) configured to connect the second toothed wheel to a second pinion or gear which is couplable to the bicycle wheel through a freewheel,
• an electronic circuit configured to control or adjust the position of the movable member (80).

2. Propulsion unit according to claim 1, wherein the movable member is configured to translate parallel to the axis (X).

3. Propulsion unit according to any previous claim, wherein the movable member is mounted between the two toothed wheels. on a linear guide.

4. Propulsion unit according to any previous claim, wherein the movable member and each of the two toothed wheels comprise portions (82, 52, 54, 84) which can be fitted one into the other, or can be coupled with one another.

5. Propulsion unit according to claim 4, wherein the portions which can be inserted one into the other, or which can be coupled with one another, comprise a radial or front toothing.

6. Propulsion unit according to any previous claim, comprising an actuator for pushing the movable member (80) towards one or each of the two operating positions.

7. Propulsion unit according to claim 6, wherein the actuator is a magnetic or electric actuator.

8. Propulsion unit according to claim 6 or 7, wherein the actuator is an elastic element.

9. Propulsion unit according to any previous claim, comprising two pedals, and wherein the electronic circuit is configured to switch the movable member to the position in which it is coupled with the first toothed wheel when through sensors
it detects zero pedal speed (12), and/or
it detects a user action on a brake lever.

10. Propulsion unit according to claim 9, wherein the electronic circuit
is configured to switch the moving member to the position in which it is coupled with the second toothed wheel when through sensors
it detects pedal speed other than zero, and/or
it detects a torque exerted by the pedals.

11. Propulsion unit according to any previous claim, wherein the second pinion is a multiple-crown pinion of a shift gearbox with relative derailleur for the chain.

12. Propulsion unit according to any previous claim, comprising a battery configured to power the electric motor and to receive charging energy when the movable member is switched to the engagement position on the first toothed wheel.

13. Propulsion unit according to claim 12, wherein the electronic circuit is configured to switch the movable member to the position wherein it is coupled with the first toothed wheel when it detects a condition of the bicycle and/or an action of the user directed to braking.

14. Propulsion unit according to claim 12, wherein the electronic circuit is configured to switch the movable member to the position wherein it is coupled with the first toothed wheel when it detects that the bike is advancing downhill.

15. Bicycle comprising
a wheel,
a first pinion or gear rotationally integral with the wheel,
a second pinion or gear which is coupled to the wheel through a freewheel,
a propulsion unit according to any of the previous claims.

## Patentansprüche

1. Antriebseinheit für ein elektrisches Fahrrad mit:
einen Elektromotor (M) zur Unterstützung der Tretbewegung,
ein erstes (24) und ein zweites (22) Zahnrad, die
um dieselbe Achse (X) drehbar sind und
mit dem Motor verbunden werden können, um ein Antriebsmoment aufzunehmen,
ein bewegliches Element (80), das so konfiguriert ist, dass es eine Drehbewegung vom Motor aufnimmt und sie auf eines der Zahnräder überträgt,
wobei jedes der Zahnräder mit einem Abschnitt (82, 84) versehen ist, der mit dem beweglichen Element koppelbar ist, das selektiv zwischen zwei Betriebspositionen verschiebbar ist, in denen es - jeweils - zu einer Zeit nur mit dem verbindbaren Abschnitt eines der beiden Zahnräder in Eingriff steht und das andere freilässt.
**dadurch gekennzeichnet, dass** die Antriebseinheit umfasst:
• eine erste Kette (30) zum Übertragen des Antriebsmoments auf das erste Zahnrad von einem ersten Ritzel oder Zahnrad, das drehbar mit einem Rad des Fahrrads verbunden werden kann,
• eine zweite Kette (32), die so konfiguriert ist, dass sie das zweite Zahnrad mit einem zweiten Ritzel oder Zahnrad verbindet, das über einen Freilauf mit dem Fahrradrad koppelbar ist,
• eine elektronische Schaltung, die so konfiguriert ist, dass sie die Position des beweglichen Elements (80) steuert oder einstellt.

2. Antriebseinheit nach Anspruch 1, wobei das bewegliche Element so konfiguriert ist, dass es sich parallel zur Achse (X) bewegt.

3. Antriebseinheit nach einem der vorhergehenden Ansprüche, wobei das bewegliche Element zwischen den beiden Zahnrädern auf einer Linearführung montiert ist.

4. Antriebseinheit nach einem der vorhergehenden Ansprüche, wobei das bewegliche Element und jedes der beiden Zahnräder Teile (82, 52, 54, 84) umfassen, die ineinander gesteckt oder miteinander gekoppelt werden können.

5. Antriebseinheit nach Anspruch 4, wobei die ineinander steckbaren oder miteinander koppelbaren Abschnitte eine Radial- oder Frontverzahnung aufweisen.

6. Antriebseinheit nach einem der vorhergehenden Ansprüche, umfassend ein Aktuator zum Schieben des beweglichen Elements (80) in eine oder jede der beiden Betriebspositionen.

7. Antriebseinheit nach Anspruch 6, wobei der Aktuator ein magnetischer oder elektrischer Aktuator ist.

8. Antriebseinheit nach Anspruch 6 oder 7, wobei der Aktuator ein elastisches Element ist.

9. Antriebseinheit nach einem der vorhergehenden Ansprüche, umfassend zwei Pedale, und wobei die elektronische Schaltung so konfiguriert ist, dass sie das bewegliche Element in die Position schaltet, in der es mit dem ersten Zahnrad gekoppelt ist, wenn sie durch Sensoren sie eine Pedalgeschwindigkeit von Null (12) detektiert, und/oder sie eine Benutzeraktion an einem Bremshebel erkennt.

10. Antriebseinheit nach Anspruch 9, wobei die elektronische Schaltung so konfiguriert ist, dass sie das bewegliche Element in die Position schaltet, in der es mit dem zweiten Zahnrad gekoppelt ist, wenn sie durch Sensoren
eine Pedalgeschwindigkeit ungleich Null erfasst und/oder
ein von den Pedalen ausgeübtes Drehmoment feststellt.

11. Antriebseinheit nach einem der vorhergehenden Ansprüche, wobei das zweite Ritzel ein mehrkroniges Ritzel eines Schaltgetriebes mit zugehörigem Umwerfer für die Kette ist.

12. Antriebseinheit nach einem der vorhergehenden Ansprüche, umfassend eine Batterie, die so konfiguriert ist, dass sie den Elektromotor mit Energie versorgt und Ladeenergie erhält, wenn das bewegliche Element in die Eingriffsposition auf dem ersten Zahnrad geschaltet wird.

13. Antriebseinheit nach Anspruch 12, wobei die elektronische Schaltung so konfiguriert ist, dass sie das bewegliche Element in die Position schaltet, in der es mit dem ersten Zahnrad gekoppelt ist, wenn sie einen Zustand des Fahrrads und/oder eine auf das Bremsen gerichtete Handlung des Benutzers erkennt.

14. Antriebseinheit nach Anspruch 12, wobei die elektronische Schaltung so konfiguriert ist, dass sie das bewegliche Element in die Position schaltet, in der es mit dem ersten Zahnrad gekoppelt ist, wenn sie erkennt, dass sich das Fahrrad bergab bewegt.

15. Fahrrad, umfassend
ein Rad,
ein erstes Ritzel oder Zahnrad, das drehbar mit dem Rad verbunden ist,
ein zweites Ritzel oder Zahnrad, das über einen Freilauf mit dem Rad verbunden ist,
eine Antriebseinheit nach einem der vorhergehenden Ansprüche.

## Revendications

1. Unité de propulsion pour bicyclette électrique comprenant
un moteur électrique (M) pour assister le pédalage,
une première (24) et une deuxième (22) roues dentées qui sont
tournant autour du même axe (X) et
reliées au moteur pour recevoir le couple d'entraînement,
un élément mobile (80) configuré pour recevoir un mouvement de rotation du moteur et le transférer à l'une de ces roues dentées,
chacune de ces roues dentées est pourvue d'une partie (82, 84) pouvant être accouplée à l'élément mobile, qui peut être déplacée sélectivement entre deux positions de fonctionnement dans lesquelles - respectivement - elle n'engage à un moment donné que la partie raccordable de l'une des deux roues dentées, en laissant l'autre inactive ;
**caractérisé par le fait que** l'unité de propulsion comprend
une première chaîne (30) pour transmettre le couple d'entraînement à la première roue dentée à partir d'un premier pignon ou engrenage rotatif intégrable à une roue de la bicyclette,
une deuxième chaîne (32) configurée pour relier la deuxième roue dentée à un deuxième pignon ou engrenage qui est couplé à la roue de la bicyclette par l'intermédiaire d'une roue libre,
un circuit électronique configuré pour contrôler ou ajuster la position de l'élément mobile (80).

2. Unité de propulsion selon la revendication 1, dans laquelle l'élément mobile est configuré pour se déplacer parallèlement à l'axe (X).

3. Unité de propulsion selon toute revendication précédente, dans laquelle l'élément mobile est monté entre les deux roues dentées sur un guide linéaire.

4. Unité de propulsion selon toute revendication précédente, dans laquelle l'élément mobile et chacune des deux roues dentées comprennent des parties (82, 52, 54, 84) qui peuvent s'emboîter l'une dans l'autre, ou qui peuvent être couplées l'une à l'autre.

5. Unité de propulsion selon la revendication 4, dans laquelle les portions qui peuvent être insérées l'une dans l'autre, ou qui peuvent être accouplées l'une à l'autre, comprennent une denture radiale ou frontale.

6. Unité de propulsion selon toute revendication précédente, comprenant un actionneur pour pousser l'élément mobile (80) vers l'une ou chacune des deux positions de fonctionnement.

7. Groupe de propulsion selon la revendication 6, dans lequel l'actionneur est un actionneur magnétique ou électrique.

8. Unité de propulsion selon la revendication 6 ou 7, dans laquelle l'actionneur est un élément élastique.

9. Unité de propulsion selon toute revendication précédente, comprenant deux pédales, et dans laquelle le circuit électronique est configuré pour commuter l'élément mobile dans la position dans laquelle il est couplé à la première roue dentée lorsque, par l'intermédiaire de capteurs il détecte une vitesse nulle de la pédale (12), et/ou il détecte une action de l'utilisateur sur un levier de frein.

10. Unité de propulsion selon la revendication 9, dans laquelle le circuit électronique est configuré pour commuter l'élément mobile dans la position dans laquelle il est couplé à la seconde roue dentée lorsque, par l'intermédiaire de capteurs
il détecte une vitesse de pédalage différente de zéro, et/ou
il détecte un couple exercé par les pédales.

11. Unité de propulsion selon l'une quelconque des revendications précédentes, dans laquelle le second pignon est un pignon à couronnes multiples d'une boîte de vitesses avec dérailleur relatif pour la chaîne.

12. Unité de propulsion selon toute revendication précédente, comprenant une batterie configurée pour alimenter le moteur électrique et pour recevoir l'énergie de charge lorsque l'élément mobile est placé en position d'engagement sur la première roue dentée.

13. Unité de propulsion selon la revendication 12, dans laquelle le circuit électronique est configuré pour commuter l'élément mobile dans la position où il est couplé à la première roue dentée lorsqu'il détecte un état de la bicyclette et/ou une action de l'utilisateur orientée vers le freinage.

14. Unité de propulsion selon la revendication 12, dans laquelle le circuit électronique est configuré pour commuter l'élément mobile dans la position dans laquelle il est couplé à la première roue dentée lorsqu'il détecte que le vélo avance en descente.

15. Bicyclette comprenant
une roue
un premier pignon ou une première roue dentée solidaire en rotation de la roue,
un second pignon ou engrenage couplé à la roue par l'intermédiaire d'une roue libre,
une unité de propulsion selon l'une quelconque des revendications précédentes.
